# FASCICULE DE BREVET EUROPEEN

(11) **EP 3 735 364 B1**
(45) Date de publication et mention de la délivrance du brevet: **24.01.2024**
(21) Numéro de dépôt: 18839691.5
(22) Date de dépôt: 13.12.2018
(51) Int. Cl.: B60R 16/02

(54) **STRUCTURE DE SUPPORT D'UN ÉLÉMENT ADAPTÉ POUR ETRE FIXÉ SUR UN PIED AVANT D'UN VÉHICULE**
TRAGSTRUKTUR FÜR EIN AN EINER FRONTSÄULE EINES FAHRZEUGS ZU BEFESTIGENDES ELEMENT
SUPPORT STRUCTURE FOR AN ELEMENT TO BE FIXED TO A FRONT PILLAR OF A VEHICLE

(30) Priorité: 05.01.2018 FR 1850073
(43) Date de publication de la demande: 11.11.2020
(73) Titulaire: Stellantis Auto SAS, 78300 Poissy (FR)
(72) Inventeur: COMFAITS, Virginie, 78990 Elancourt (FR); LLORET, David, 91360 Villemoisson-sur-Orge (FR)
(86) Numéro de dépôt international: PCT/FR2018/053246
(87) Numéro de publication internationale: WO 2019/135036

(56) Documents cités:
- EP-A1- 2 639 799
- EP-A1- 2 703 228
- EP-A2- 1 780 355
- WO-A1-2011/095723
- WO-A1-2017/187035
- FR-A1- 2 925 425
- JP-A- 2000 236 608
- JP-A- 2000 355 253
- US-A1- 2016 304 036

## Description

L'invention concerne de manière générale une structure de support d'un élément destiné à être fixé sur un pied avant d'un véhicule, notamment automobile.

L'invention concerne plus particulièrement une structure de support notamment des faisceaux de câbles électriques du véhicule.

L'invention porte également sur un véhicule automobile équipé d'une telle structure de support.

Il est bien connu que dans un véhicule automobile, une pluralité de câbles, qu'ils soient par exemple des câbles électriques, coaxiaux ou optiques, assurent l'alimentation en énergie électrique et la transmission de données provenant de différents capteurs du véhicule vers le moteur. En outre, ces différents câbles passent au niveau du pied avant du véhicule, c'est-à-dire au niveau de la partie de carrosserie située à l'avant du véhicule, de chacun des côtés du véhicule.

Cette zone de pied avant est très exigüe. Pourtant, la complexité technique grandissante notamment des équipements techniques et électroniques des véhicules induit une augmentation du nombre de câbles présent dans cette zone de pied avant. Il en résulte une difficulté croissante à intégrer une structure de support de ces câbles dans un espace de plus en plus exigu.

Il est connu de l'état de la technique le brevet français FR2925425B1 (numéro de demande FR 0760105) qui divulgue une structure de support fixée sur un pied avant de véhicule et comportant un moyen de guidage de câbles, un moyen de fixation d'une garniture de pied avant et un moyen de réception d'une commande d'ouverture de capot.

La structure de support présente des dimensions selon des directions respectivement transversale et longitudinale au véhicule conséquente pour permettre l'indexation de nombreux éléments, comme notamment un moyen d'indexage d'un garnissage et le moyen de réception de la commande d'ouverture de capot. La structure de support occupe donc un espace transversal et longitudinal relativement important, qui n'est pas toujours compatible avec les nouvelles exigences des constructeurs automobiles.

Dans ce contexte, la présente invention vise donc à pallier à cet inconvénient en optimisant l'espace occupé par la structure de support afin de garantir sa bonne insertion au niveau du pied avant du véhicule.

À cet effet, la structure de support de l'invention est adaptée pour être fixée à un pied avant d'un véhicule, notamment automobile, et comprend au moins un moyen de guidage d'au moins un faisceau de câbles, au moins un premier moyen de fixation de ladite structure de support au pied avant, et est essentiellement caractérisée en ce qu'elle comprend en outre un deuxième moyen de fixation permettant de solidariser à la fois la structure de support et une commande d'ouverture de capot du véhicule au pied avant dudit véhicule.

La structure de support de l'invention peut également comporter les caractéristiques optionnelles suivantes considérées isolément ou selon toutes les combinaisons techniques possibles :
- La structure de support est formée par un corps généralement plan dont les bords sont rabattus perpendiculairement à ce plan, et en ce que ladite structure a une forme générale de Y dont les trois branches forment trois parties respectivement supérieure, inférieure et latérale pour permettre le passage au moins de premier, deuxième et troisième faisceaux de câbles, chacune des parties s'étendant depuis le deuxième moyen de fixation.
- Chacune des parties supérieure, inférieure et latérale est réalisée sous la forme d'une goulotte pour permettre le guidage d'au moins une partie des faisceaux de câbles associés.
- Le deuxième moyen de fixation est entouré par une bordure circonférentielle faisant saillie du corps de la structure perpendiculairement audit corps, cette bordure étant située à distance des bords de la structure pour permettre le passage des faisceaux de câbles dans l'espace formé entre les bords de la structure et la bordure circonférentielle, le premier faisceau s'étendant le long des goulottes latérale et supérieure, le deuxième faisceau s'étendant le long des goulottes supérieure et inférieure, et le troisième faisceau s'étendant le long des goulottes latérale et inférieure.
- La partie supérieure est adaptée pour venir en en vis-à-vis d'une traverse de planche de bord du véhicule, en ce que la partie inférieure est adaptée pour venir en vis-à-vis du tapis du véhicule, et en ce que la partie latérale s'étend selon une direction longitudinale vers l'arrière du véhicule.
- Les bords de la partie inférieure présentent chacun un décroché pour permettre le passage d'au moins un quatrième faisceau de câbles selon une direction transversale à la partie inférieure.
- La structure de support comprend au moins un moyen de fixation des faisceaux de câbles et au moins un moyen de fixation d'une garniture du pied avant.
- La structure de support comprend au moins un moyen d'indexage de la commande d'ouverture de capot qui s'étend en saillie vers l'extérieur de la structure depuis l'un des bords de la structure dans le plan du corps de ladite structure.

L'invention porte également sur un pied avant d'un véhicule, notamment automobile, comportant une structure de support telle que décrite précédemment sur laquelle sont fixés au moins trois faisceaux de câbles, chaque faisceau de câbles ayant en section transversale une forme quadrilatérale.

L'invention porte également sur un véhicule automobile comprenant au moins un pied avant tel que décrit précédemment.

D'autres caractéristiques et avantages de l'invention ressortiront clairement de la description qui en est donnée ci-dessous, à titre indicatif et nullement limitatif, en référence aux figures annexées parmi lesquelles :
- la figure 1 illustre une vue en perspective d'une partie de l'habitacle du véhicule, représentant notamment un pied avant, une commande d'ouverture de capot et une structure de support de l'invention sur laquelle différents faisceaux de câbles sont fixés ;
- la figure 2 illustre une vue en perspective de la structure de support de la figure 1.

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

La description se limite à la description du pied avant 6 du véhicule situé à la gauche du conducteur installé dans le siège conducteur. Bien entendu, le pied avant droit est le symétrique du pied avant gauche 6 relativement à un plan vertical s'étendant longitudinalement par rapport au véhicule.

Par convention, les termes longitudinal et transversal sont définis par rapport au véhicule, et les termes avant et arrière par rapport à la direction en marche avant classique du véhicule.

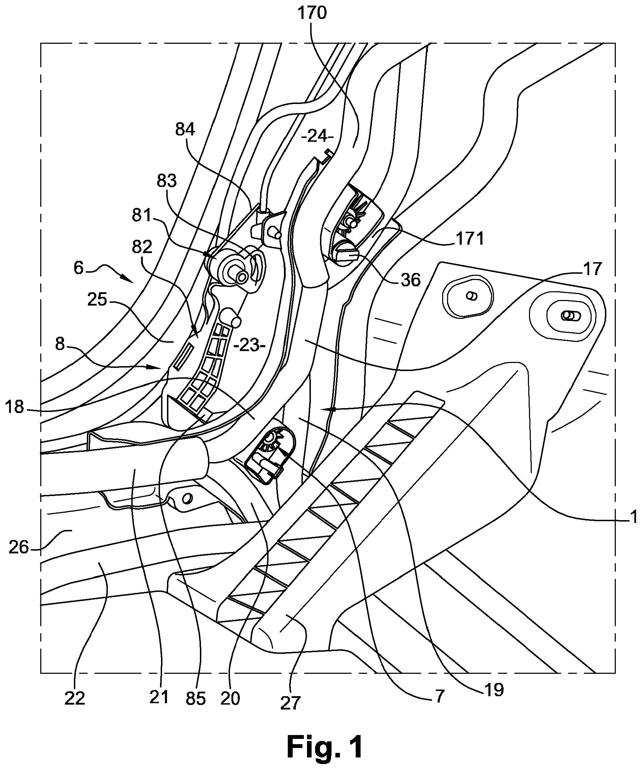

Le pied avant 6 représenté sur la figure 1 est réalisé en deux pièces métalliques 23, 24 embouties et assemblées de sorte que la section transversale de cette pièce ait une forme de L. Ce pied avant 6 comprend une première paroi courbée 25 et une seconde paroi 26 sensiblement plane et s'étendant dans un plan vertical et longitudinal.

Le véhicule comprend une commande intérieure d'ouverture du capot 8 comportant une partie active 81 et une partie passive 82 de forme allongée supportant ladite partie active 81. Dans la suite de la description, cette commande intérieure d'ouverture du capot 8 sera identifiée par le sigle COIC.

La partie active 81 de la COIC 8 comprend un levier actionnable 83 en rotation par le conducteur du véhicule, à l'aide d'une palette (non représentée) solidaire de ce levier 83 et accessible depuis l'habitacle du véhicule. Elle permet donc au conducteur interagissant avec cette palette d'actionner le levier 83 de la COIC 8 pour déclencher l'ouverture du capot.

Une première extrémité 84 de la partie passive 82 est fixée à la première paroi 25 du pied avant 6 par tout organe de fixation connu. En outre, une seconde extrémité 85 de la partie passive 82 de la COIC 8 est fixée en deux points distincts (non représentés) à la seconde paroi 26 du pied avant 6. La fixation en deux points distincts de cette seconde extrémité 85 de la partie passive 82 sera détaillée plus loin.

De manière à alimenter en électricité l'ensemble des équipements et éclairages du véhicule, plusieurs faisceaux 17 - 21 de câbles traversent l'habitacle du véhicule depuis la zone moteur jusqu'aux différents éléments à alimenter. Comme représenté sur la figure 1, une pluralité de faisceau de câble issus d'un faisceau général 17 provenant de l'avant du véhicule, ce faisceau de câbles 17 étant relié à la batterie du véhicule, s'étendent entre le pied avant 6 du véhicule et un repose pied 27 du véhicule. Ces faisceaux 17 - 21 se dirigent ensuite respectivement vers l'arrière du véhicule et sous le repose pied 27 selon une direction transversale au véhicule.

Pour optimiser l'espace occupé par ces faisceaux de câbles 17 - 21 entre le repose pied 27 et le pied avant 6 du véhicule, lesdits faisceaux de câbles sont agencés dans une structure de support 1 fixée sur la seconde paroi 26 du pied avant 6 du véhicule, cette structure de support 1 comprenant des moyens de guidage 2, 3, 4 des faisceaux de câbles 17 - 21.

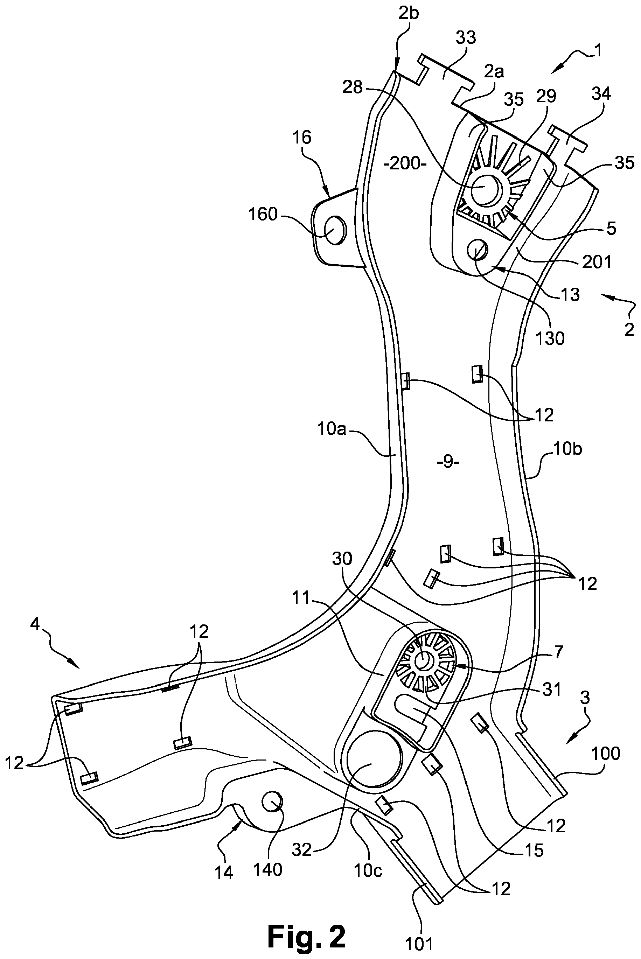

En référence à la figure 2, la structure de support 1 est formée par un corps généralement plan 9, ce corps comportant des bords 10a, 10b, 10c rabattus perpendiculairement audit plan en direction de l'habitacle du véhicule. La structure de support 1 a une forme générale de Y, dont les trois branches qui sont les moyens de guidage précités forment trois parties respectivement supérieure 2, inférieure 3 et latérale 4.

La partie supérieure 2 s'étend selon une direction sensiblement verticale en direction d'une traverse de planche de bord. L'extrémité libre 2a de la partie supérieure 2 est en outre disposée en vis-à-vis de cette traverse sans pour autant venir en appui contre cette dernière. L'espace existant entre la traverse et l'extrémité libre 2a de la partie supérieure 2 de la structure de support permet une opération ultérieure de mise en place d'une planche de bord sur la traverse. La partie supérieure comprend en outre les bords 10a et 10b.

Au niveau de la portion d'extrémité libre 2b de la partie supérieure 2, la structure de support 1 comprend un premier orifice traversant 28 renforcé par des nervures radiales de renfort 29. Ce premier orifice 28 permet de fixer, à l'aide d'un écrou sur goujon soudé ou de tout autre organe de fixation connu 36, la structure de support 1 à la deuxième paroi 26 du pied avant 6 du véhicule. Cet orifice 28 et ces nervures de renfort 29 forment donc un premier moyen de fixation 5 de la structure de support 1 au pied avant 6.

La partie inférieure 3 s'étend en direction du plancher et du tapis du véhicule, sans pour autant venir en appui contre ce tapis. En outre, les bords 10b, 10c de cette partie comprennent chacun un décroché 100, 101 dont la fonction sera exposée plus loin dans la description. Cette partie inférieure 3 permet de guider une partie des faisceaux de câbles 19, 20 vers le plancher, avant que ces faisceaux de câbles 19, 20 ne se courbent pour suivre une direction transversale sous le repose pied 27.

La partie latérale 4 s'étend selon une direction sensiblement longitudinale vers l'arrière du véhicule, et permet de guider une partie des faisceaux de câbles 18, 21 vers l'arrière du véhicule.

Les trois parties supérieure 2, inférieure 3 et latérale 4 sont en outre réalisées chacune sous la forme d'une goulotte afin de permettre le guidage des faisceaux de câbles 17 - 21 du véhicule.

Au niveau du point de convergence des trois parties 2, 3, 4, la structure de support 1 comprend un deuxième moyen de fixation 7 de la structure 1 au pied avant 6. Ce deuxième moyen de fixation 7 présente la particularité de permettre de solidariser à la fois la structure de support 1 et la partie passive 82 de la COIC 8 au pied avant 6 du véhicule. Ce deuxième moyen de fixation 7 forme donc moyen de fixation commun de la structure de support 1 et de la commande d'ouverture de capot 8, au pied avant 6 du véhicule.

Ce deuxième moyen de fixation 7 comprend un deuxième orifice traversant 30 renforcé par des nervures radiales 31. Ce deuxième orifice 30 coïncide avec une ouverture traversante (non représenté) réalisée dans la partie passive 82 de la COIC 8, formant le premier point de fixation de la seconde extrémité 85 de ladite partie passive 82. Le deuxième orifice de fixation 30 de la structure de support 1 ainsi que l'ouverture pratiquée dans la COIC 8 doivent donc être agencés de manière coaxiale préalablement à l'insertion d'une vis ou de tout autre organe de fixation au pied avant 6 du véhicule.

Afin de faciliter l'opération consistant à faire coïncider le deuxième orifice 30 et l'ouverture de la COIC 8 précités, la structure de support 1 comprend deux moyens d'indexage 15, 16 de cette dernière sur la partie passive 82 de la COIC 8.

Le premier moyen d'indexage 15 est réalisé sous la forme d'une lumière oblongue à proximité du deuxième orifice de fixation 30 de la structure de support 1, et est adaptée pour coïncider avec un premier doigt faisant saillie de la partie passive 82 de la COIC 8, la section transversale de ce premier doigt présentant une forme complémentaire à celle du premier moyen d'indexage 15.

Le second moyen d'indexage 16 est formé par une oreille percée faisant saillie vers l'extérieur de la structure de support 1 de l'un des bords 10a de la partie supérieure 2 dans le plan du corps 9 de la structure de support 2. Cette oreille 16 est adaptée pour coïncider avec un second doigt faisant saillie de la partie passive 82 de la COIC 8, la section transversale de ce second doigt présentant une forme complémentaire à celle du perçage 160 de l'oreille 16.

Enfin, la partie passive 82 de la COIC 8 comprend une deuxième ouverture (non représentée) formant le second point de fixation de la COIC à la deuxième paroi 26 du pied avant 6. Pour que ce deuxième point de fixation demeure accessible par un opérateur même après montage de la structure de support 1 sur le pied avant 6, ladite structure de support 1 comprend un perçage d'accès 32 réalisé dans son corps 9 à proximité du deuxième moyen de fixation 7. Ce perçage d'accès 32 est adapté pour être disposé en vis-à-vis du deuxième point de fixation de la COIC 8 lorsque cette dernière et la structure de support 1 sont fixées au pied avant 6.

Pour permettre le guidage uniforme des faisceaux de câbles 17 - 21 le long des goulottes formant les trois parties supérieure 2, inférieure 3 et latérale 4, le deuxième moyen de fixation 7 de la structure de support 2, qui pour rappel est positionné au point de convergence des trois parties supérieure 2, inférieure 3 et latérale 4, est entouré par une bordure circonférentielle 11 faisant saillie du corps 9 de ladite structure de support 1, perpendiculairement au plan dans lequel s'étend ledit corps 9. Cette bordure 11 est en outre positionnée à distance des bords 10a, 10b, 10c de la structure de support pour permettre le passage des faisceaux de câbles (figure 1) dans l'espace formé entre les bords 10a - 10c de la structure 1 et la bordure circonférentielle 11.

Ainsi, les caractéristiques structurelles de la structure de support 1 permettent le passage :
- d'un premier faisceau de câbles 18 qui s'étend le long des goulottes supérieure 2 et latérale 4, qui passe également entre la bordure circonférentielle 11 et le bord 10a ;
- d'un deuxième faisceau de câbles 19 qui s'étend le long des goulottes supérieure 2 et inférieure 3, qui passe également entre la bordure circonférentielle 11 et le bord 10b, et
- d'un troisième faisceau de câbles 20 qui s'étend le long des goulottes inférieure 3 et latérale 4, qui passe également entre la bordure circonférentielle 11 et le bord 10c.

La bordure circonférentielle 11 forme donc un carrefour giratoire grâce auquel un faisceau général de câbles 17 provenant de l'avant du véhicule, relié à la batterie et s'étendant à partir de la partie supérieure 2 de la structure de support 1, peut être divisé en les premier 18, deuxième 19 et troisième 20 faisceaux de câbles listés ci-dessus pour alimenter des équipements situés à des endroits différents du véhicule, ces faisceaux de câbles 18 - 20 pouvant être facilement agencés dans les goulottes respectives. En se dirigeant vers l'arrière du véhicule, les deuxième 18 et troisième faisceaux 20 se rassemblent en un unique faisceau 21.

L'ensemble formé par le deuxième moyen de fixation 7 et la bordure circonférentielle 11 permet donc d'une part d'assurer la fixation commune de la structure de support 1 et de la COIC 8, et d'autre part d'assurer le guidage et le peignage optimal de tous les faisceaux de câbles 18, 19, 20 tout autour de la bordure 11.

En outre, pour réduire l'occupation transversale de ces faisceaux de câbles 17 - 21, ces derniers présentent en section transversale une forme quadrilatérale, préférentiellement une forme rectangulaire. En effet, pour un même nombre de câble dans le faisceau, une section circulaire occupe moins d'espace transversal qu'une section rectangulaire, étant entendu que c'est la largeur du rectangle qui s'étend transversalement dans ce cas.

Enfin, comme représenté à la figure 1, les décrochés 100, 101 réalisés au niveau des bords 10b, 10c de la partie inférieure 3 permet le passage d'un quatrième faisceau de câbles 22 selon une direction transversale à la goulotte formant la partie inférieure 3 de la structure de support 1. Par la présence de ces décrochés 100, 101, l'espace transversal occupé par ce quatrième faisceau 22 est réduit et permet le passage dudit faisceau 22 entre le pied avant 6 et le repose pied 27 du véhicule.

Comme représenté à la figure 2, la structure de support 1 comprend des moyens de fixation 12 des faisceaux de câbles 17 - 21 à ladite structure de support 1. Ces moyens de fixation des câbles sont formés par des couples de trous 12 réalisés dans le corps 9 de la structure au niveau des première 2, deuxième 3 et troisième 4 goulottes pour permettre le passage de colliers de serrage destinés à enserrer les faisceaux de câbles 17 - 21 et à les solidariser à la structure de support 1.

En outre, la structure de support comprend deux encoches 33, 34 faisant saillie de l'extrémité libre 2a de sa partie supérieure 2 et qui forment également des supports pour des colliers de serrage, permettant de fixer des faisceaux de câbles 170, 171 à la partie supérieure 2 de la structure de support 1.

En référence à la figure 2, la structure de support 1 comprend des moyens de fixation 13, 14 d'une garniture de pied avant 6, ces moyens étant formés par :
- une seconde oreille 14 percée 140 faisant saillie du bord 10c de la partie latérale 4 dans le plan du corps 9 de la structure de support 1, et
- une excroissance 13 faisant saillie perpendiculairement au corps 9 de la structure 1 au voisinage du premier moyen de fixation 5 de ladite structure 1. Cette excroissance 13 est également percée 130.

Pour permettre la fixation de la garniture de pied avant 6 à la structure de support 1, la garniture comprend deux organes de fixation par engagement élastique dans les perçages 140, 130 respectivement de la seconde oreille 14 et de l'excroissance 13.

Enfin, comme on le voit sur la figure 2, les bords 35 de l'excroissance se prolonge vers l'extrémité 2a de la partie supérieure 2, de sorte que la portion d'extrémité 2b de la partie supérieure 2 forme deux saignées 200, 201 assurant le guidage de câbles 170, 171. De la sorte, le faisceau général de câbles 17 peut se diviser en deux sous-faisceaux 170, 171 au voisinage de l'excroissance 13, comme cela est visible sur la figure 1.

La structure de support 1 de l'invention permet ainsi de loger et de guider un nombre important de faisceaux de câbles 17 - 22, sans que l'espace transversal occupé par ces derniers n'en soit augmenté. En outre, la présence d'un moyen de fixation 7 permettant de solidariser ensemble la structure de support 1 et la COIC 8 contribue à limiter l'espace occupé par les différents éléments fixés au pied avant 6 du véhicule.

## Revendications

1. Ensemble comprenant une commande d'ouverture de capot (8) et une structure de support (1), la dite structure de support étant adaptée pour être fixée à un pied avant (6) d'un véhicule, notamment automobile, comprenant au moins un moyen de guidage (2, 3, 4) d'au moins un faisceau de câbles (17, 170, 171, 18, 19, 20, 21), au moins un premier moyen de fixation (5) de ladite structure de support au pied avant (6), **caractérisée en ce que** la structure de support (1) comprend en outre un deuxième moyen de fixation (7) permettant de solidariser à la fois la structure de support (1) et la commande d'ouverture de capot (8) du véhicule au pied avant (6) dudit véhicule.

2. Ensemble selon la revendication précédente comprenant une commande d'ouverture de capot (8) et une structure de support (1), **caractérisée en ce que** la structure de support (1) est formée par un corps (9) généralement plan dont les bords (10a - 10c) sont rabattus perpendiculairement à ce plan, et **en ce que** ladite structure (1) a une forme générale de Y dont les trois branches forment trois parties respectivement supérieure (2), inférieure (3) et latérale (4) pour permettre le passage au moins de premier (18), deuxième (19) et troisième (20) faisceaux de câbles, chacune des parties (2, 3, 4) s'étendant depuis le deuxième moyen de fixation (7).

3. Ensemble selon la revendication précédente comprenant une commande d'ouverture de capot (8) et une structure de support (1), la structure de support (1) étant **caractérisée en ce que** chacune des parties supérieure (2), inférieure (3) et latérale (4) est réalisée sous la forme d'une goulotte pour permettre le guidage d'au moins une partie des faisceaux de câbles (17, 170, 171, 18, 19, 20, 21) associés.

4. Ensemble selon la revendication précédente comprenant une commande d'ouverture de capot (8) et une structure de support (1), la structure de support (1) étant **caractérisée en ce que** le deuxième moyen de fixation (7) est entouré par une bordure circonférentielle (11) faisant saillie du corps (9) de la structure (1) perpendiculairement audit corps (9), cette bordure (11) étant située à distance des bords (10a - 10c) de la structure (1) pour permettre le passage des faisceaux de câbles dans l'espace formé entre les bords (10a - 10c) de la structure (1) et la bordure circonférentielle (11), le premier faisceau (18) s'étendant le long des goulottes latérale (4) et supérieure (2), le deuxième faisceau (19) s'étendant le long des goulottes supérieure (2) et inférieure (3), et le troisième faisceau (20) s'étendant le long des goulottes latérale (4) et inférieure (3).

5. Ensemble selon l'une des revendications 2 à 4, comprenant une commande d'ouverture de capot (8) et une structure de support (1), la structure de support (1) étant **caractérisée en ce que** la partie supérieure (2) est adaptée pour venir en en vis-à-vis d'une traverse de planche de bord du véhicule, **en ce que** la partie inférieure (3) est adaptée pour venir en vis-à-vis du tapis du véhicule, et **en ce que** la partie latérale (4) s'étend selon une direction longitudinale vers l'arrière du véhicule.

6. Ensemble selon l'une des revendications 2 à 5, comprenant une commande d'ouverture de capot (8) et une structure de support (1), la structure de support (1) étant **caractérisée en ce que** les bords (10b,10c) de la partie inférieure (3) présentent chacun un décroché (100, 101) pour permettre le passage d'au moins un quatrième faisceau de câbles (22) selon une direction transversale à la partie inférieure (3).

7. Ensemble selon l'une quelconque des revendications précédentes, comprenant une commande d'ouverture de capot (8) et une structure de support (1), la structure de support (1) étant **caractérisée en ce qu'**elle comprend au moins un moyen de fixation (12) des faisceaux de câbles et au moins un moyen de fixation (13, 14) d'une garniture du pied avant (6).

8. Ensemble selon l'une quelconque des revendications précédentes, comprenant une commande d'ouverture de capot (8) et une structure de support (1), la structure de support (1) étant **caractérisée en ce qu'**elle comprend au moins un moyen d'indexage (16) de la commande d'ouverture de capot (8) qui s'étend en saillie vers l'extérieur de la structure (1) depuis l'un des bords (10a) de la structure dans le plan du corps (9) de ladite structure (1).

9. Pied avant (6) d'un véhicule, notamment automobile, comportant un ensemble selon l'une des revendications 1 à 8, ledit ensemble comprenant une commande d'ouverture de capot (8) et une structure de support (1) sur laquelle sont fixés au moins trois faisceaux de câbles (17, 170, 171, 18, 19, 20, 21), chaque faisceau de câbles ayant en section transversale une forme quadrilatérale.

10. Véhicule automobile comprenant au moins un pied avant (6) selon la revendication 9.

## Patentansprüche

1. Anordnung, umfassend eine Steuerung zum Öffnen einer Motorhaube (8) und eine Tragstruktur (1), wobei die Tragstruktur angepasst ist, um an einem vorderen Fuß (6) eines Fahrzeugs, insbesondere eines Kraftfahrzeugs, befestigt zu werden, umfassend mindestens ein Führungsmittel (2, 3, 4) für mindestens ein Kabelbündel (17, 170, 171, 18, 19, 20, 21), mindestens ein erstes Mittel (5) zum Befestigen der Tragstruktur am vorderen Fuß (6), **dadurch gekennzeichnet, dass** die Tragstruktur (1) ferner ein zweites Befestigungsmittel (7) umfasst, das es ermöglicht, fest miteinander verbunden zu werden Sowohl die Trägerstruktur (1) als auch die Motorhaubenöffnungssteuerung (8) des Fahrzeugs am vorderen Fahrzeugfuß (6) anzuordnen.

2. Anordnung nach dem vorhergehenden Anspruch, die einen Deckelöffnungsbefehl (8) und eine Tragstruktur (1) umfasst, **dadurch gekennzeichnet, dass** die Tragstruktur (1) durch einen im Allgemeinen ebenen Körper (9) gebildet ist, dessen Ränder (10a - 10c) senkrecht zu dieser Ebene umgebogen sind, und dass die Struktur (1) eine allgemeine Y-Form aufweist, deren drei Schenkel jeweils drei obere (2), untere (3) und seitliche (4) Abschnitte bilden, um den Durchgang von mindestens einem ersten (18), zweiten (19) und dritten (20) Kabelbaum zu ermöglichen, wobei jeder der Abschnitt (2, 3,) vom zweiten Befestigungsmittel (7) ausgehend.

3. Anordnung nach dem vorhergehenden Anspruch, die eine Steuerung zum Öffnen der Abdeckung (8) und eine Trägerstruktur (1) umfasst, wobei die Trägerstruktur (1) **dadurch gekennzeichnet ist, dass** jeder der oberen (2), unteren (3) und seitlichen (4) Abschnitte als eine Rinne ausgebildet ist, um die Führung von wenigstens einem Teil der zugeordneten Kabelbäume (17, 170, 171, 18, 19, 20, 21) zu ermöglichen.

4. Anordnung nach dem vorhergehenden Anspruch, die eine Steuerung zum Öffnen der Abdeckung (8) und eine Trägerstruktur (1) umfasst, wobei die Trägerstruktur (1) **dadurch gekennzeichnet ist, dass** die zweite Befestigungseinrichtung (7) von einem Umfangsrand (11) umgeben ist, der von dem Körper (9) der Struktur (1) senkrecht zu dem Körper (9) vorsteht, wobei dieser Rand (11) im Abstand von den Rändern (10a - 10c) der Struktur (1) angeordnet ist, um den Durchgang von Kabelbündeln in dem Raum zu ermöglichen, der zwischen den Rändern (10a - 10c) der Struktur (1) und der Struktur gebildet ist Umfangsrand (11), wobei sich der erste Strahl (18) entlang der seitlichen (4) und oberen (2) Rinne erstreckt, sich der zweite Strahl (19) entlang der oberen (2) und unteren (3) Rinne erstreckt und sich der dritte Strahl (20) entlang der seitlichen (4) und unteren (3) Rinne erstreckt.

5. Baugruppe nach einem der Ansprüche 2 bis 4, die einen Deckelöffnungsbefehl (8) und eine Tragstruktur (1) umfasst, wobei die Tragstruktur (1) **dadurch gekennzeichnet ist, dass** der obere Teil (2) so ausgebildet ist, dass er einem Armaturenbrettquerträger des Fahrzeugs gegenüberliegt, dass der untere Teil (3) so ausgebildet ist, dass er der Fahrzeugmatte gegenüberliegt, und dass sich der seitliche Teil (4) in einer Längsrichtung nach hinten des Fahrzeugs erstreckt.

6. Anordnung nach einem der Ansprüche 2 bis 5, mit einer Haubenöffnungssteuerung (8) und einer Tragstruktur (1), wobei die Tragstruktur (1) **dadurch gekennzeichnet ist, dass** die Ränder (10b, 10c) des unteren Teils (3) jeweils eine Aussparung (100, 101) aufweisen, um den Durchgang von mindestens einem vierten Kabelbaum (22) in einer Richtung quer zum unteren Teil (3) zu ermöglichen.

7. Anordnung nach einem der vorhergehenden Ansprüche, umfassend eine Haubenöffnungssteuerung (8) und eine Stützstruktur (1), wobei die Stützstruktur (1) **dadurch gekennzeichnet ist, dass** sie mindestens ein Mittel (12) zum Befestigen der Kabelbäume und mindestens ein Mittel (13, 14) zum Befestigen einer Vorderfußgarnitur (6) umfasst.

8. Anordnung nach einem der vorhergehenden Ansprüche, die einen Deckelöffnungsbefehl (8) und eine Tragstruktur (1) umfasst, wobei die Tragstruktur (1) **dadurch gekennzeichnet ist, dass** sie mindestens ein Indexmittel (16) des Deckelöffnungsbefehls (8) umfasst, das sich von einem der Ränder (10a) der Struktur in der Ebene des Körpers (9) der Struktur (1) nach außen erstreckt.

9. Vorderfuß (6) eines Fahrzeugs, insbesondere eines Kraftfahrzeugs, mit einer Anordnung nach einem der Ansprüche 1 bis 8, wobei die Anordnung eine Haubenöffnungssteuerung (8) und eine Tragstruktur (1) umfasst, an der mindestens drei Kabelbäume (17, 170, 171, 18, 19, 20, 21) befestigt sind, wobei jeder Kabelbaum im Querschnitt eine vierseitige Form hat.

10. Kraftfahrzeug mit mindestens einem Vorderfuß (6) nach Anspruch 9.

## Claims

1. Assembly comprising a cover opening control (8) and a support structure (1), said support structure being adapted to be fixed to a front leg (6) of a vehicle, in particular a motor vehicle, comprising at least one means (2, 3, 4) for guiding at least one bundle of cables (17, 170, 171, 18, 19, 20, 21), at least one first means (5) for fixing said support structure to the front leg (6), **characterized in that** the support structure (1) further comprises a second fixing means (7) for fixing attach both the support structure (1) and the hood opening control (8) of the vehicle to the front foot (6) of said vehicle.

2. Assembly according to the preceding claim, comprising a cover opening control (8) and a support structure (1), **characterized in that** the support structure (1) is formed by a generally plane body (9) whose edges (10a - 10c) are folded back perpendicularly to this plane, and **in that** the said structure (1) has a general Y shape, the three branches of which form three parts, respectively upper (2), lower (3) and lateral (4) parts, to allow at least first (18), second (19) and third (20) bundles of cables, each of the parts (2, 3, 4), to pass extending from the second fastening means (7).

3. Assembly according to the preceding claim comprising a cover opening control (8) and a support structure (1), the support structure (1) being **characterized in that** each of the upper (2), lower (3) and lateral (4) parts is produced in the form of a chute to allow the guiding of at least a part of the associated cable bundles (17, 170, 171, 18, 19, 20, 21).

4. Assembly according to the preceding claim comprising a cover opening control (8) and a support structure (1), the support structure (1) being **characterized in that** the second fixing means (7) is surrounded by a circumferential border (11) projecting from the body (9) of the structure (1) perpendicularly to said body (9), this border (11) being situated at a distance from the edges (10a - 10c) of the structure (1) to allow the passage of the bundles of cables in the space formed between the edges (10a - 10c) of the structure (1) and the border circumferential wall (11), the first bundle (18) extending along the lateral (4) and upper (2) chutes, the second bundle (19) extending along the upper (2) and lower (3) chutes, and the third bundle (20) extending along the lateral (4) and lower (3) chutes.

5. Assembly according to one of claims 2 to 4, comprising a cover opening control (8) and a support structure (1), the support structure (1) being **characterized in that** the upper part (2) is adapted to come opposite a dashboard cross-member of the vehicle, **in that** the lower part (3) is adapted to come opposite the vehicle belt, and **in that** the lateral part (4) extends in a longitudinal direction towards the rear of the vehicle.

6. Assembly according to one of claims 2 to 5, comprising a cover opening control (8) and a support structure (1), the support structure (1) being **characterized in that** the edges (10b, 10c) of the lower part (3) each have a step (100, 101) to allow at least one fourth bundle of cables (22) to pass in a direction transverse to the lower part (3).

7. Assembly according to any one of the preceding claims, comprising a cover opening control (8) and a support structure (1), the support structure (1) being **characterized in that** it comprises at least one means (12) for fixing the bundles of cables and at least one means (13, 14) for fixing a lining of the front foot (6).

8. Assembly according to any one of the preceding claims, comprising a cover opening control (8) and a support structure (1), the support structure (1) being **characterized in that** it comprises at least one means (16) for indexing the cover opening control (8) which projects outwards from one of the edges (10a) of the structure in the plane of the body (9) of said structure (1).

9. Front foot (6) of a vehicle, in particular a motor vehicle, comprising an assembly according to one of claims 1 to 8, the said assembly comprising a cover opening control (8) and a support structure (1) on which are fixed at least three bundles of cables (17, 170, 171, 18, 19, 20, 21), each bundle of cables having a quadrilateral cross-section.

10. Motor vehicle comprising at least one front leg (6) according to claim 9.
